# EUROPÄISCHE PATENTSCHRIFT

(11) **EP 3 263 790 B1**
(45) Veröffentlichungstag und Bekanntmachung des Hinweises auf die Patenterteilung: **07.08.2024**
(21) Anmeldenummer: 17000724.9
(22) Anmeldetag: 16.05.2011
(51) Int. Cl.: E04B 1/68, E04F 13/08, C09K 3/10, A47K 3/00

(54) **VERWENDUNG EINES SCHNITTSCHUTZ-STREIFENS IN KOMBINATION MIT EINEM DICHT- UND MONTAGEBAND**
USE OF A CUT PROTECTION STRIP IN COMBINATION WITH A SEALING AND ASSEMBLY STRIP
UTILISATION D'UNE BANDE DE PROTECTION CONTRE LES COUPURES EN COMBINAISON AVEC UNE BANDE D'ÉTANCHÉITÉ ET DE MONTAGE

(30) Priorität: 09.07.2010 AT 43810 U
(43) Veröffentlichungstag der Anmeldung: 03.01.2018
(62) Teilanmeldung aus: 11004035.9
(73) Patentinhaber: Sanipat GmbH, 6045 Meggen (CH)
(72) Erfinder: GASSMANN, Urs, 6343 Buonas (CH)
(74) Vertreter: Prins Intellectual Property AG

(56) Entgegenhaltungen:
- EP-A1- 1 944 155
- EP-A2- 0 377 813
- EP-A2- 1 038 485
- EP-A2- 1 891 877
- EP-A2- 2 071 091
- WO-A1-2009/086570
- WO-A2-2010/086428
- CH-A- 492 840
- CH-A5- 683 852
- CH-A5- 690 162
- CH-B1- 701 724
- DE-A1- 10 105 096
- DE-A1- 102005 053 594
- DE-A1- 102006 003 076
- DE-A1- 102007 010 997
- DE-A1- 102007 030 868
- DE-A1- 102007 043 593
- DE-A1- 4 341 039
- DE-U1- 29 905 152
- DE-U1- 29 908 603
- DE-U1- 8 711 126
- DE-U1- 9 115 396
- FR-A1- 2 914 548
- JP-A- H09 125 560
- US-A- 4 828 908
- US-A1- 2006 254 207
- US-B2- 7 014 803
- US-B2- 7 211 291
- HENRIK-HORST WETZEL: "Verbundabdichtungen in Nassräumen - Vor- und Nachteile - Erfahrungen aus der Praxis", 5. LEIZIGER ABDICHTUNGSSEMINAR - ABDICHTUNGEN IM BAUWESEN NORMUNG, ZULASSUNG, FORSCHUNG UND ANWENDUNG, 19 January 2010 (2010-01-19), pages 113 - 134, XP055640674
- HENRIK-HORST WETZEL: "Verbundabdichtungen bei hoch beanspruchten Nassräumen Neue Regeln und Abdichtungsverfahren sowie Beispiele aus der Praxis", 5. INTERNATIONALES FUSSBODEMFORUM, 22 September 2006 (2006-09-22), pages 1 - 51, XP055640679

## Beschreibung

Die vorliegende Erfindung betrifft eine Verwendung gemäß Anspruch 1 eines Dicht- und Montagebands, wie es im Sanitärbereich beim Setzen von Bade-, Duschwannen, Waschbecken oder ähnlichen Einbaugegenständen oder aber auch bei Wand-Wand-, Wand-Boden- oder Boden-Boden-Übergängen Verwendung findet.

Solche Dicht- und Montagebänder weisen vorzugsweise eine Klebefläche auf einer Vorderseite auf, die beispielsweise bündig mit dem Rand des Einbaugegenstandes - beispielsweise an einer senkrechten Ausprägung des Wannenrandes, auch Wannenauf- oder -abbordung genannt - angebracht werden. Diese Klebefläche auf der Vorderseite ist nur in einem ersten, in diesem Fall unteren Bereich des Dicht- und Montagebandes angeordnet, sodass nach dem Anbringen des Dicht- und Montagebandes an dem Rand des Einbaugegenstandes ein zweiter, in diesem Fall oberer Bereich des Dicht- und Montagebandes den Rand des Einbaugegenstandes überragt. Die Rückseite dieses zweiten bzw. oberen Bereiches des Dicht- und Montagebandes kann ebenfalls eine Klebefläche aufweisen, die an einer Anschlusswand oder an einem Anschlussboden angeklebt wird und anschließend üblicherweise überlappend befliest wird. Es sind jedoch auch zweite bzw. obere Bereiche üblich, die keine rückseitige Klebefläche aufweisen, sondern beispielsweise aus einem Gewirke bestehen, das mit Fliesenkleber, einer Dichtschlämme oder einem flüssigen Dichtanstrich auf die Anschlusswand oder auf den Anschlussboden aufgetragen werden und so eine zweite, rückseitige Dichtfläche bilden.

Somit besteht grundsätzlich bei Dicht- und Montagebändern für die beschriebenen Zwecke ein erster Bereich in Form einer ersten Klebe- bzw. Dichtfläche zu einem Einbaugegenstand, zu einer ersten Wand oder zu einem ersten Boden und ein zweiter Bereich in Form einer zweiten Klebe- bzw. Dichtfläche zu der Anschlusswand oder dem Anschlussboden oder aber auch zu einem zweiten Einbaugegenstand. Diese beiden Bereiche oder Klebe- bzw. Dichtflächen sind üblicherweise ein- oder mehrstückig durch das Material einer Trägerfolie bzw. eines Trägerstreifens miteinander verbunden und können auf derselben Seite des Trägermaterials oder an gegenüberliegenden Seiten des Trägermaterials angeordnet sein.

In der täglichen Anwendung hat sich gezeigt, dass es von Vorteil ist, wenn die Trägerfolie des Dicht- und Montagebandes zwar biegsam, aber relativ widerstandsfähig ist. Insbesondere die zweite Klebe- bzw. Dichtfläche zu der Anschlusswand oder dem Anschlussboden hingegen ist wünschenswerterweise möglichst geschmeidig, um selbst auf nicht ganz glatten oder gar porösen Untergründen eine zuverlässige Dichtigkeit zu gewährleisten. Die wünschenswerte Erfüllung beider Eigenschaften, obwohl sie eher als konträr gelten, stellt somit einen limitierenden Kompromiss und somit einen Nachteil bei der Herstellung herkömmlicher Dicht- und Montagebänder dar.

Ein weiterer Nachteil ergibt sich bei der Montage eines Einbaugegenstandes hinein in eine Ecke, die beispielsweise aus zwei zueinander annähernd senkrecht stehenden Anschlusswänden gebildet ist. Solche Ecken sind besonders anfällig gegen Feuchtigkeitseinbruch und Schimmelbildung. Wenn das Material des Dicht- und Montagebandes bzw. die Trägerfolie so weich und geschmeidig ist, dass es gut in die Ecke eingeklebt werden kann, dann bietet es die erwünschte Robustheit nicht mehr, auch im Hinblick auf minimale Bewegungen nicht, die zwischen dem Einbaugegenstand und der Anschlusswand auftreten, man denke diesbezüglich beispielsweise an die unterschiedlichen Temperaturausdehnungskoeffizienten von z.B. Stahlbadewannen und Mauerwerk oder Beton oder an Setzungen des Einbaugegenstandes oder an Bodensetzungen.

Wenn hingegen genügend robuste Materialien als Material für das Dicht- und Montageband bzw. für die Trägerfolie verwendet werden, ist es wiederum nachteilig für die Montage des Einbaugegenstandes in die Ecke. Um die Fliesen mehr oder minder auf Stoß setzen zu können, zugunsten eines anschließenden Verfugens mittels einer ansprechenden, nicht allzu breiten Silikonfuge, ist der Fliesenleger versucht, das Material des Dicht- und Montagebandes oder die Trägerfolie einzuschneiden. Damit ist jedoch ausgerechnet in den feuchtigkeitsanfälligen Ecken die Dichtigkeit gefährdet, was wiederum einen Nachteil bei herkömmlichen Dicht- und Montagebändern darstellt.

Ein weiterer Nachteil tritt bei herkömmlichen Dicht- und Montagebändern auf, wenn nach einem ersten kompletten Einbau des Einbaugegenstandes, eventuell nach mehreren Jahren, lediglich die Silikonfuge erneuert werden soll. Das Silikon der Silikonfuge kann gealtert sein, undichte Stellen aufweisen oder durch Schimmelbildung unansehnlich geworden sein. Der Handwerker, der die alte Silikonfuge entfernen möchte, wird sie mit einem spitzen, scharfen Gegenstand wie beispielsweise einem Messer wegschneiden wollen. Wenn er jedoch nur ein wenig zu tief schneidet, - ohne dass er dieses erkennen könnte - so zerschneidet er auch das unterhalb der Silikonfuge angeordnete Dicht- und Montageband und reduziert so die Gesamt-Dichtigkeit der neuen Dichtanordnung erheblich. Die Verlegung eines neuen Dicht- und Montagebandes wiederum wäre nicht wirtschaftlich, weil hierfür mindestens die unterste Reihe der Fliesen und der Einbaugegenstand entfernt und wieder neu eingebaut bzw. die Fliesen neu verlegt werden müssten.

Die Aufgabe der vorliegenden Erfindung ist, ein Dicht- und Montageband zu stellen, das die oben beschriebenen Nachteile weitestgehend vermeidet und die Praktikabilität bei der Montage und bei einer Erneuerung einer Silikonfuge erhöht. Bekannte Dicht- und Montageband-Anordnungen sollen für später anfallende Erneuerungen einer Silikonfuge sicherer gestaltet und dadurch die Langzeit-Dichtigkeit verbessert sein. Des Weiteren sollen die Herstellungs- und Betriebskosten gegenüber bekannter Dicht- und Montagebänder wenn möglich reduziert sein.

Die Aufgabe wird durch die Merkmale des unabhängigen Patentanspruches 1 gelöst. Die Lösung der Aufgabe besteht in der Verwendung eines dünnen und flexiblen Schnittschutz-Streifens in Kombination mit einer herkömmlichen Mindestanordnung eines Dicht- und Montagebandes. Dieser flexible Schnittschutz-Streifen ist so angeordnet - beispielsweise indem er an der Vorderseite des Trägermaterials angeklebt -, dass er sowohl den ersten bzw. oberen Bereich bzw. die erste Klebe- bzw. Dichtfläche, als auch den zweiten bzw. unteren Bereich bzw. die zweite Klebe- und Dichtfläche des Dicht- und Montagebandes teilweise überlappt. Mit anderen Wörtern, am Beispiel eines annähernd senkrecht angeordneten Dicht- und Montagebandes zwischen einem Einbaugegenstand und einer Anschlusswand verdeutlicht, überragt die obere Kante des Schnittschutz-Streifens die untere Kante der rückseitigen Dichtfläche des Dicht- und Montagebandes zu der Anschlusswand und die untere Kante des Schnittschutz-Streifens überragt die obere Kante der vorderseitigen Dichtfläche des Dicht- und Montagebandes zu einer Anschlussfläche der Auf- oder Abbordung des Einbaugegenstandes. Somit ist ein sparsamer Einsatz des Schnittschutz-Materials bei guter Funktionserfüllung gewährleistet, es sind jedoch auch Schnittschutz-Anordnungen möglich, die sich über den kompletten oberen bzw. ersten oder über den kompletten unteren bzw. zweiten oder komplett über beide Bereiche erstrecken, erneut in vorder- oder rückseitig aufgeklebter Form.

Der Schnittschutz-Streifen besteht aus einer flexiblen Metallfolie oder einem flexiblen Kevlar- oder Carbongewebe, wobei die Metallfolie vorzugsweise aus einer dünnen, flexiblen Metallfolie, die jedoch so widerstandsfähig ist, dass sie mit einem spitzen, scharfen Gegenstand wie z.B. einem Messer oder einem Teppichmesser nicht oder nur sehr schwer zerschnitten werden kann. Die Metallfolie kann auch perforiert sein oder eine Gitterstruktur aufweisen. Als weitere mögliche vorzugsweise schnittfeste Materialien kommen Duratex oder ähnliche verstärkte, moderne Gewebe in Betracht. Das schnittfeste Material kann generell teil- oder vollflächig an der Vorderseite des Trägermaterials angeklebt sein. Das Trägermaterial ist vorzugsweise elastisch dehnbar, sodass der Schnittschutz an seinem erwünschten Anbringungsort verbleiben kann.

Vorzugsweise bei vorgefertigten Sets von Dicht- und Montagebändern, bei denen die Eckbereiche des Einbaugegenstandes vorher festgelegt sind, ist es möglich, den Schnittschutz nicht durchgehend über die gesamte Länge des Dicht- und Montagebandes vorzusehen, sondern nur partiell für gefährdete Bereiche, z.B. die Eckbereiche.

Ein sparsamer, weil nur partieller Einsatz des unter Umständen kostenintensiven Schnittschutz-Materials ist mit einer weiteren Ausgestaltungsvariante eines erfindungsgemäßen Dicht- und Montagebandes möglich, das in seinem Trägermaterial mindestens eine Tasche oder mindestens eine Schlaufe ausbildet, in die der Schnittschutz-Streifen vor Ort bei der Montage eingesetzt wird, beispielsweise nur in die Eckbereiche. Die Tasche kann aus einer einzelnen oder aus zwei sich annähernd mittig öffnenden Lippen gebildet sein, die das Trägermaterial des Dicht- und Montagebandes selbst ausbildet. Die Lippe oder die Lippen können jedoch auch auf das Trägermaterial aufgeklebt sein und stellen so eine gute Nachrüstmöglichkeit für herkömmliche Dicht- und Montagebänder dar.

Überhaupt ist es auch möglich, partiell oder über die gesamte Länge des Dicht- und Montagebandes, einen oder mehrere Schnittschutz-Streifen mittels eines Klebestreifens am Trägermaterial des Dicht- und Montagebandes anzukleben, der den Schnittschutz-Streifen oder die Schnittschutzstreifen teilweise überlappt.

Ein Schnittschutz ist des Weiteren mit einem Eckausgleichs-Profil kombinierbar, das in der österreichischen Gebrauchsmusteranmeldung GM 437/2010 der gleichen Anmelderin beschrieben ist und gemeinsam mit der österreichischen Prioritäts-Gebrauchsmusteranmeldung GM 438/2010 zu der vorliegenden Anmeldung am gleichen Tag eingereicht worden ist. Das dort beschriebene Dicht- und Montageband ist, wie oben beschrieben, mit einem Schnittschutz kombinierbar, aber auch das dort beschriebene Eckausgleichs-Profil selbst kann einen aufgeklebten Schnittschutz-Streifen der oben beschriebenen Art aufweisen.

Des Weiteren ist ein hierin offenbarter Schnittschutz wie oben beschrieben mit einem Trägermaterial kombinierbar, wie es in der Deutschen Gebrauchsmusteranmeldung DE 20 2010 005 018.9 der gleichen Anmelderin beschrieben ist. Das Trägermaterial ist dort hinsichtlich seiner Beschaffenheit nicht außergewöhnlich, aber mit einem zusätzlichen Dichtstreifen bzw. einem Verlängerungs-Dichtstreifen über- oder unterlappend verlängert. Die dort beschriebenen Anbringungsorte des Verlängerungs-Dichtstreifens und die hier offenbarten Anbringungsorte des Schnittschutz-Streifens interferieren nicht und sind somit ohne erfinderisches Zutun kombinierbar.

Eine weitere Ausgestaltungsvariante eines Dicht- und Montagebandes, wie es in Anspruch 1 verwendet wird, mit einem Schnittschutz für einen annähernd senkrechten Einbau zwischen einem Einbaugegenstand und einer Anschlusswand umfasst ein herkömmlich ausgebildetes Trägermaterial mit einer vorderseitigen Klebefläche im zweiten bzw. unteren Bereich und einer rückseitigen Dichtfläche im ersten bzw. oberen Bereich, wobei die Letztere eine Klebefläche sein kann, oder aber auch nur ein Dichtstreifen oder ein Gewirke, der oder das mit Fliesenkleber, einer Dichtschlämme oder einem flüssigen Dichtanstrich aufgetragen wird. Ein Verlängerungs-Dichtstreifen, der den kompletten ersten bzw. oberen Bereich des Trägermaterials überlappt, formt gleichzeitig die vorhin beschriebene, im montierten Zustand annähernd waagerechte Trägerfläche aus. Diese annähernd waagerechte Trägerfläche ist selbst als Schnittschutz ausgebildet, indem eines der oben erwähnten Materialien aufgeklebt, eingegossen oder mit dem Verlängerungs-Dichtstreifen verschweißt ist.

Die beschriebenen Ausgestaltungsvarianten eines Dicht- und Montagebandes, wie es in Anspruch 1 verwendet wird, mit einem Schnittschutz können nach Belieben mit einer Schallsperre oder/und einem Kapillarschutz oder/und einem Unterfütterungsstreifen oder/und einem längsperforierten Schaumstoff-Streifen ergänzt sein. Diese Merkmale sind detailliert in der zitierten Gebrauchsmusteranmeldung DE 20 2010 005 018.9 beschrieben und in der vorliegenden Anmeldung exemplarisch lediglich an einer der folgenden Figuren gezeigt, obwohl sie für alle Ausgestaltungsvarianten fakultativ gültig sind.

Grundsätzlich sind die offenbarten Schnittschutz-Streifen auch - ausschließlich oder zusätzlich zu den bereits beschriebenen Anbringungsorten - in oder an der oben beschriebenen Schallsperre oder/und dem Schaumstoff-Streifen anordenbar.

Sämtliche beschriebenen Ausgestaltungsvarianten eines Dicht- und Montagebandes, wie es in Anspruch 1 verwendet wird, sind grundsätzlich auch mit mehreren Schnittschützen realisierbar, sei es in Form der beschriebenen Schnittschutz-Streifen.

Die beschriebenen unterschiedlichen Ausgestaltungsvarianten eines Dicht- und Montagebandes, wie es in Anspruch 1 verwendet wird, mit einem oder mehreren Schnittschützen sind miteinander kombinierbar. So kann beispielsweise ein Schnittschutz sowohl in oder an dem Trägermaterial, als auch in oder auf der im montierten Zustand annähernd waagerechten Trägerfläche, als auch in dem beschriebenen Verlängerungs-Dichtstreifen vorgesehen sein.

Die vorliegende Anmeldung offenbart ein Verfahren zur Applikation eines Dicht- und Montagebandes, wie es in Anspruch 1 verwendet wird, mit folgenden grundsätzlichen Verfahrensschritten:
- Anbringen eines ersten bzw. unteren Bereiches des Trägermaterials des Dicht- und Montagebandes an eine Anschlussfläche eines Einbaugegenstandes oder an eine erste Wand oder an einen ersten Boden;
- Setzen des Einbaugegenstandes an eine Anschlusswand oder an einen Anschlussboden;
- Anbringen eines zweiten bzw. oberen Bereiches des Dicht- und Montagebandes an die Anschlusswand oder den Anschlussboden;
- Befliesen des ersten bzw. oberen Bereiches mittels Fliesen;
- Verfugen des Zwischenraumes zwischen den Fliesen und dem Einbaugegenstand.

Bei der Ausgestaltungsvariante eines Dicht- und Montagebandes, wie es in Anspruch 1 verwendet wird, mit einer oder mehreren Taschen oder einer oder mehreren Schlaufen kommt noch vor dem Befliesen das Einsetzen des Schnittschutzes in die Tasche oder die Taschen oder in die Schlaufe oder die Schlaufen in Betracht.

Ein Dicht- und Montagebandes, wie es in Anspruch 1 verwendet wird, bringt folgende Vorteile:
- Die Dichtigkeit des Dicht- und Montagebandes ist verbessert und hält länger.
- Das Dicht- und Montageband ist widerstandsfähig und robust um einen annähernd mittigen Kern herum und weist flexible, somit gut klebende Oberflächen auf, die sich vom annähernd mittigen Kern weg distal erstrecken.
- Das Dicht- und Montageband kann bei einem Erneuern der Silikonfuge nicht zerschnitten werden.

. Weitere oder vorteilhafte Ausgestaltungen eines Dicht- und Montagebandes, wie es in Anspruch 1 verwendet wird, bilden die Gegenstände der abhängigen Ansprüche.

Die Bezugszeichenliste ist Bestandteil der Offenbarung.

Anhand von Figuren wird die Erfindung symbolisch und beispielhaft näher erläutert. Die Figuren werden zusammenhängend und übergreifend beschrieben. Sie stellen schematische und beispielhafte Darstellungen dar und sind nicht maßstabsgetreu, auch in der Relation der einzelnen Bestandteile zueinander nicht. Gleiche Bezugszeichen bedeuten das gleiche Bauteil, Bezugszeichen mit unterschiedlichen Indices geben funktionsgleiche oder ähnliche Bauteile an.

Es zeigen dabei
Fig. 1 eine beispielhafte erste Ausgestaltungsvariante eines Dicht- und Montagebandes, wie es in Anspruch 1 verwendet wird, im montierten Zustand, mit einem aufgeklebten Schnittschutz-Streifen;
Fig. 2 eine beispielhafte Ausgestaltungsvariante eines nicht erfindungsgemäßen Dicht- und Montagebandes im montierten Zustand, mit einem eingegossenen Schnittschutz-Streifen;
Fig. 3 eine beispielhafte Ausgestaltungsvariante eines nicht erfindungsgemäßen Dicht- und Montagebandes, ebenfalls im montierten Zustand, bei der das Trägermaterial selbst als Schnittschutz ausgestaltet ist;
Fig. 4 eine beispielhafte zweite Ausgestaltungsvariante eines erfindungsgemäßen Dicht- und Montagebandes, ebenfalls im schematisch dargestellten montierten Zustand, mit einem Schnittschutz-Streifen, der in eine Tasche am Trägerprofil einsetzbar ist;

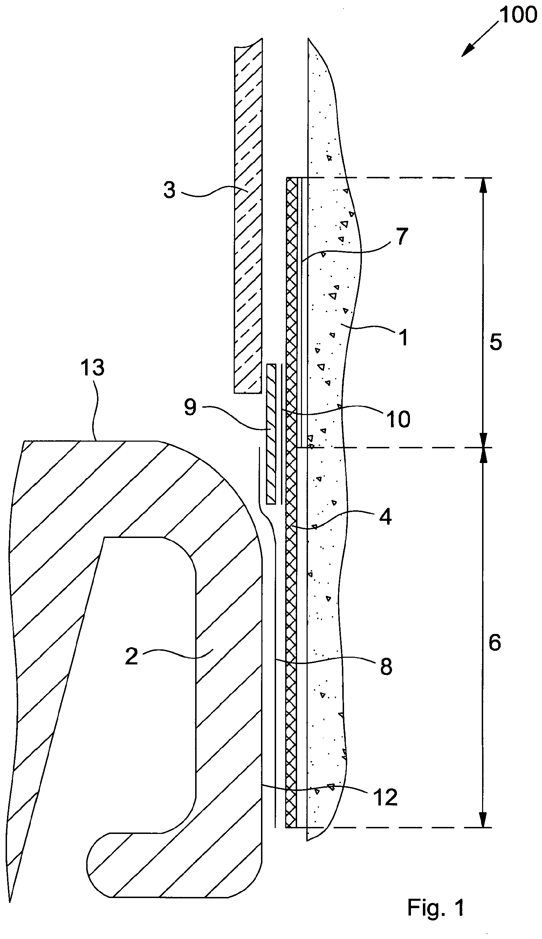

In der Fig. 1 ist eine erste Ausgestaltungsvariante eines Dicht- und Montagebandes 100, wie es in Anspruch 1 verwendet wird, schematisch und geschnitten im montierten Zustand zwischen einer Anschlusswand 1, einer beispielhaften Wannenabbordung 2 und einer Wandfliese 3 dargestellt. Der Fliesenkleber, mit dem die Wandfliese angeklebt ist, oder eine allfällige Dichtschlämme ist der besseren Verständlichkeit der Zeichnung halber weggelassen. Ebenfalls der besseren Verständlichkeit halber sind alle Klebeflächen symbolisch lediglich mittels einer Linie dargestellt, die leicht beabstandet von den sie im montierten Zustand eigentlich bündig verbindenden Materialien eingezeichnet ist.

Das Dicht- und Montageband 100 umfasst eine Trägerfolie 4, die sich in einen ersten bzw. oberen Bereich 5 und einen zweiten bzw. unteren Bereich 6 unterteilt. Der erste bzw. obere Bereich 5 der Trägerfolie 4 ist mit einer rückseitigen Klebefläche 7 an der Anschlusswand 1 befestigt. Der zweite bzw. untere Bereich 6 ist, einer Mindestausführung eines herkömmlichen Dicht- und Montagebandes entsprechend, mit einer vorderseitigen Klebefläche 8 an einer annähernd senkrechten Anschlussfläche 12 der Wannenabbordung 2 angeklebt. Bei allen in der vorliegenden Anmeldung offenbarten Ausgestaltungsvarianten ist es auch möglich, diese Klebefläche 8 im vormontierten Zustand nicht an der Trägerfolie 4, sondern im Vorhinein an der annähernd senkrechten Fläche 12 der Wannenabbordung 2 vorzusehen. Die in der vorliegenden Anmeldung beanspruchten Ergebnisse des fertig montierten Zustandes eines Dicht- und Montagebandes bleiben dadurch unverändert.

Ein Schnittschutz-Streifen 9 ist mittels einer Klebefläche 10 an der Trägerfolie 4 angeordnet, und zwar so, dass die Klebefläche 8 teilweise unterlappt wird, bzw. die Mitte des Schnittschutz-Streifens 9 ca. der Höhe einer annähernd waagerechten Fläche 13 der Wannenabbordung 2 entspricht. Der Schnittschutz-Streifen 9 überlappt sowohl den ersten bzw. oberen Bereich 5 der Trägerfolie 4, als auch den zweiten bzw. unteren Bereich 6 der Trägerfolie 4 jeweils teilweise.

Der Schnittschutz-Streifen 9 besteht aus einer flexiblen, vorzugsweise dünnen Metallfolie. Falls der Schnittschutz-Streifen 9 im Querschnitt in etwa so dick wie abgebildet sein sollte, so bietet es sich an, fakultativ einen etwa gleich dicken Unterfütterungsstreifen unterhalb des Schnittschutz-Streifens 9 anzuordnen, ebenfalls mit einer Klebefläche 10 zu der Vorderseite der Trägerfolie 4, oder mit einer den zweiten bzw. unteren Bereich 6 der Trägerfolie 4 komplett abdeckenden Klebefläche.

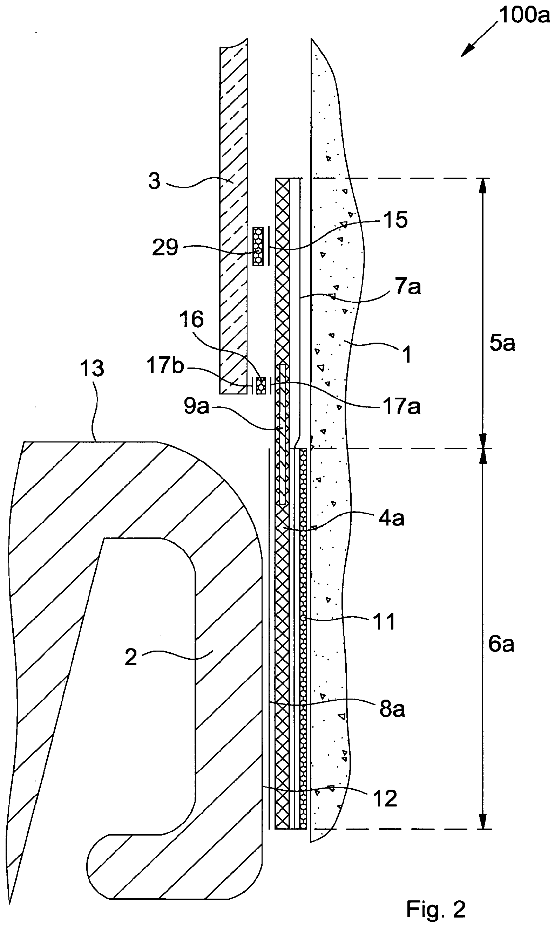

Die Fig. 2 zeigt eine schematische Schnittdarstellung einer zweiten Ausgestaltungsvariante eines nicht erfindungsgemäßen Dicht- und Montagebandes 100a im montierten Zustand, ebenfalls zwischen der Anschlusswand 1, der beispielhaften Wannenabbordung 2 und der Wandfliese 3 aus der Fig. 1 .

Das dargestellte Dicht- und Montageband 100a umfasst grundsätzlich dieselbe Anordnung einer Trägerfolie 4a mit einem ersten bzw. oberen Bereich 5a, einem zweiten bzw. unteren Bereich 6a und einem Schnittschutz-Streifen 9a, der dieses Mal jedoch im Unterschied zu der Fig. 1 nicht aufgeklebt, sondern in das Material der Trägerfolie 4a eingegossen ist.

Optional zu der Ausgestaltungsvariante eines nicht erfindungsgemäßen Dicht- und Montagebandes 100a, sowie auch zu der vorigen Ausgestaltungsvariante eines Dicht- und Montagebandes 100 aus der Fig. 1 und den noch folgenden Ausgestaltungsvarianten eines Dicht- und Montagebandes 100b-100o kann eine dämmende Schallsperre 11 mit einer eigenen Klebefläche an der Rückseite der Trägerfolie 4a oder mit einer durchgehenden Klebefläche 7a angeordnet sein. Ebenfalls optional zu dieser Ausgestaltungsvariante, aber auch zu allen anderen, kann ein Unterfütterungs-Streifen 29 mittels einer Klebefläche 15 an der Vorderseite des ersten bzw. oberen Bereiches 5a der Trägerfolie 4a angeordnet sein. Er dient der Unterfütterung der Wandfliese 3.

Ebenfalls optional zu der gezeigten Ausgestaltungsvariante, aber auch zu allen anderen, kann ein Kapillarschutz-Streifen 16 vorgesehen sein, der mittels einer Klebefläche 17a an der Vorderseite der Trägerfolie 4a angeklebt ist, und zwar vorzugsweise in so einer Höhe, dass die Unterkante der Wandfliese 3 in etwa bündig mittels einer Klebefläche 17b mit dem Kapillarschutz-Streifen 16 verklebt werden kann.

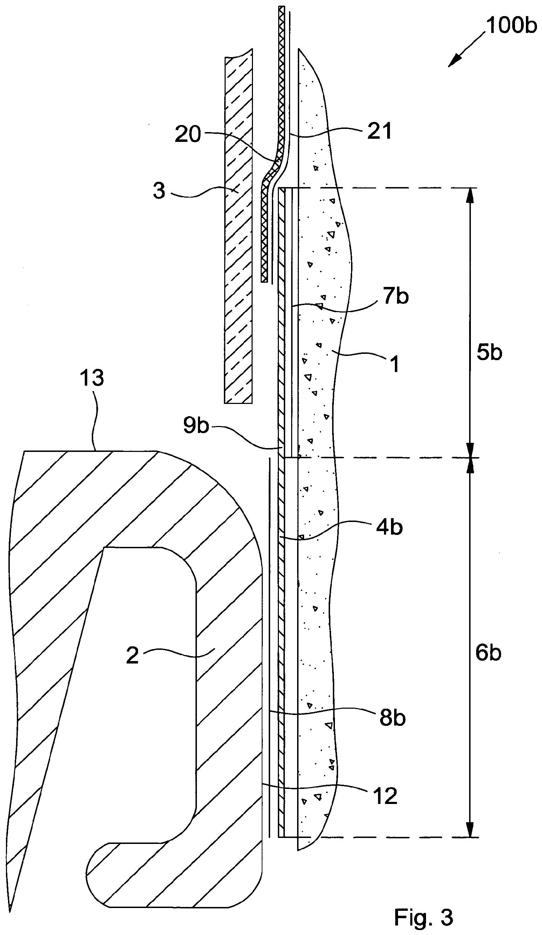

Die Fig. 3 zeigt, ebenfalls in einer schematischen Schnittdarstellung, eine Ausgestaltungsvariante eines nicht erfindungsgemäßen Dicht- und Montagebandes 100b, das sich im Unterschied zu dem Dicht- und Montageband 100a aus der Fig. 2 zunächst dadurch auszeichnet, dass eine Trägerfolie 4b gleichzeitig als einstückiger Schnittschutz 9b ausgestaltet ist, der mit einer rückseitigen Klebefläche 7b an der Anschlusswand 1 angeklebt ist und mit einer vorderseitigen Klebefläche 8b an der annähernd senkrechten Fläche 12 der Wannenabbordung 2.

Optional zu dieser Ausgestaltungsvariante eines nicht erfindungsgemäßen Dicht- und Montagebandes 100b, aber auch zu den Ausgestaltungsvarianten eines Dicht- und Montagebandes 100, 100a, 100c-100o, kann ein Verlängerungs-Dichtstreifen 20 vorgesehen sein, der mittels einer Klebefläche 21 an der Trägerfolie 4b und an der Anschlusswand 1 bzw. an einem Anschlussboden bzw. an einem zweiten Einbaugegenstand angeklebt ist.

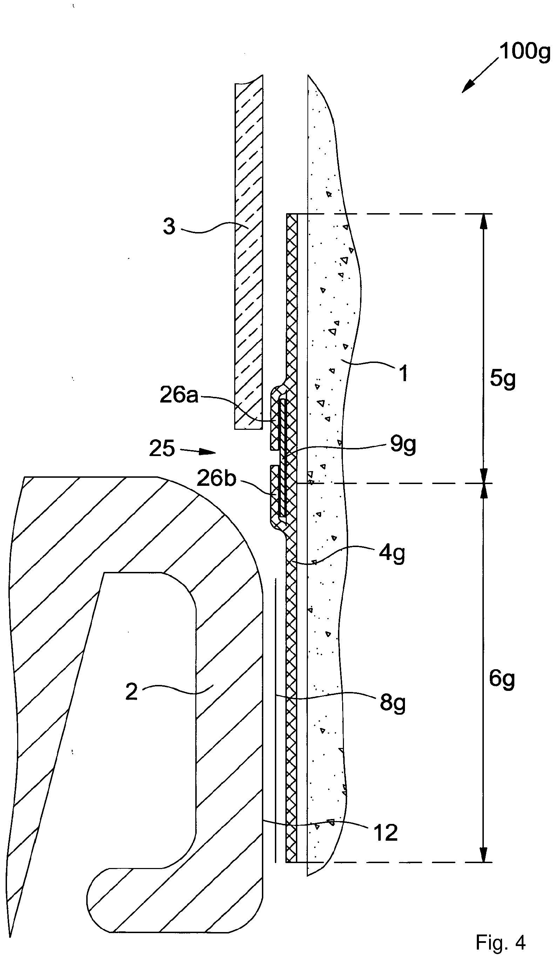

In der Fig. 4 ist ebenfalls schematisch und in einer Schnittdarstellung eine beispielhafte zweite Ausgestaltungsvariante eines Dicht- und Montagebandes 100g, wie es in Anspruch 1 verwendet wird, gezeigt, und zwar im montierten Zustand zwischen der Anschlusswand 1, der Wannenabbordung 2 und der Wandfliese 3. Eine Trägerfolie 4g bildet einen ersten bzw. oberen Bereich 5g und einen zweiten bzw. unteren Bereich 6g. Lediglich der zweite bzw. untere Bereich 6g ist mittels einer Klebefläche 8g an der annähernd senkrechten Fläche 12 der Wannenabbordung 2 angeklebt. Der erste bzw. obere Bereich 5g ist vorzugsweise aufgrund seiner Beschaffenheit als Gewirke mittels des Fliesenklebers, einer Dichtschlämme oder eines flüssigen Dichtanstriches auf die Anschlusswand 1 anbringbar.

Die Trägerfolie 4g formt mittels einer oberen Lippe 26a und einer unteren Lippe 26b eine Tasche 25 aus, in die - wahlweise auch erst vor Ort, bei der Montage und wahlweise nur in bestimmten Bereichen - durch Wegklappen der Lippen 26a und 26b ein Schnittschutz-Streifen 9g einsetzbar ist.

### Bezugszeichenliste

1, 1a-1e - erste Wand, Anschlusswand
2 - Wannenabbordung, Einbaugegenstand
3, 3a, 3b - Wand- oder Bodenfliese
4, 4a,b,g - Trägerfolie, Trägermaterial, Trägerstreifen, Trägerprofil
5, 5a,b,g - erster bzw. oberer Bereich von 4, erste Klebe- bzw. Dichtfläche
6, 6a,b,g - zweiter bzw. unterer Bereich von 4, zweite Klebe- bzw. Dichtfläche
7, 7a,b - rückseitige Klebefläche von 4 zu 1
8, 8a,b,g - vorderseitige Klebefläche von 4 zu 2
9, 9a,b,g - Schnittschutz, Schnittschutz-Streifen, Schnittschutz-Profil
10 - Klebefläche von 9 zu 4
11 - Schallsperre
12 - annähernd senkrechte Fläche von 2, Anschlussfläche
13 - annähernd waagerechte Fläche von 2
16 - Kapillarschutz-Streifen
17a, 17b - Klebefläche von 16 zu 4 bzw. 3
20 - Verlängerungs-Dichtstreifen
21 - Klebefläche von 20 zu 4 bzw. 1
25 - Tasche
26a - obere Lippe
26b - untere Lippe
29 - Unterfütterungs-Streifen
100, 100a,b,g - Dicht- und Montageband

## Patentansprüche

1. Verwendung eines Dicht- und Montagebandes (100, 100g) zum Setzen einer Bade- oder Duschwanne (2) in eine Ecke aus zwei zueinander senkrecht stehenden Anschlusswänden, wobei das Dicht- und Montageband (100, 100g) ein Trägermaterial (4, 4g) umfasst, und wobei das Trägermaterial (4, 4g) einen ersten bzw. oberen Bereich (5, 5g) und einen zweiten bzw. unteren Bereich (6, 6g) bildet und wobei das Dicht- und Montageband (100, 100g) im montierten Zustand vorderseitig mit dem zweiten bzw. unteren Bereich (6, 6g) an eine Anschlussfläche (12) der Bade- oder Duschwanne (2) und rückseitig mit dem ersten bzw. oberen Bereich (5, 5g) an eine Anschlusswand (1) angebracht ist, wobei das Dicht- und Montageband (100, 100g) einen flexiblen Schnittschutz-Streifen (9, 9g) aus einem flexiblen Material umfasst, um ein Zerschneiden des Dicht- und Montagebandes beim Wegschneiden einer Silikonfuge zu verhindern, und
wobei der flexible Schnittschutz-Streifen (9, 9g) an einer Vorder- bzw. Oberseite des Trägermaterials (4, 4g) mittels einer Klebefläche (10) angeklebt ist oder in eine Tasche (25) oder eine Schlaufe des Dicht- und Montagebandes (100g) eingesetzt wird,
wobei der Schnittschutz-Streifen (9, 9g) den ersten bzw. oberen Bereich (5, 5g) und den zweiten bzw. unteren Bereich (6, 6g) überlappt,
wobei das Dicht- und Montageband (100, 100g) senkrecht angeordnet ist, und wobei eine obere Kante des Schnittschutz-Streifens (9, 9g) die untere Kante einer rückseitigen Dichtfläche des Dicht- und Montagebandes (100, 100g) zu der Anschlusswand (1) überragt und eine untere Kante des Schnittschutz-Streifens (9, 9g) eine obere Kante einer vorderseitigen Dichtfläche des Dicht- und Montagebandes (100, 100g) zu der Anschlussfläche (12) einer Auf- oder Abbordung der Bade- oder Duschwanne (2) überragt, wobei der Schnittschutz-Streifen (9, 9g) eine flexible Metallfolie oder ein flexibles Kevlar- oder Carbon-Gewebe ist.

2. Verwendung nach Anspruch 1, wobei das Dicht- und Montageband (100, 100g) eine vorderseitige Klebefläche (8, 8g) auf einer Vorderseite des Trägermaterials (4, 4g) hin zu der Anschlussfläche (12) der Bade- oder Duschwanne (2) aufweist, wobei die vorderseitige Klebefläche (8, 8g) nur im zweiten bzw. unteren Bereich (6, 6g) des Trägermaterials (4, 4g) angeordnet ist, sodass nach dem Anbringen des Dicht- und Montagebandes (100, 100g) an der Anschlussfläche (12) der Bade- oder Duschwanne (2) der erste bzw. obere Bereich (5, 5g) die Bade- oder Duschwanne (2) überragt.

3. Verwendung nach Anspruch 2, wobei das Dicht- und Montageband (100, 100g) im montierten Zustand eine im ersten bzw. oberen Bereich (5, 5g) angeordnete rückseitige Klebefläche (7, 7g) an einer Rückseite des Trägermaterials (4, 4g) hin zu der Anschlusswand (1, 1g) aufweist.

4. Verwendung nach einem der vorangehenden Ansprüche, wobei der Schnittschutz-Streifen (9, 9g) derart angeordnet wird, dass er im montierten Zustand hinter einer Silikonfuge (28) zu liegen kommt bzw. die Silikonfuge (28) unterfüttert.

5. Verwendung nach Anspruch 4, wobei die Silikonfuge (28) zwischen der Bade- oder Duschwanne (2), der stirnseitigen Fläche einer Wandfliese (3) und dem Dicht- und Montageband (100, 100g) angeordnet ist.

6. Verwendung nach Anspruch 4 oder 5, wobei der Schnittschutz-Streifen (9, 9g) im montierten Zustand derart zwischen dem Dicht- und Montageband (100, 100g) und einer Silikonfuge (28) angeordnet ist, dass das Trägermaterial (4, 4g) beim Wegschneiden der Silikonfuge (28) nicht durchtrennt wird.

7. Verwendung nach einem der vorhergehenden Ansprüche, wobei der Schnittschutz-Streifen aus schnittfestem Material teil- oder vollflächig an der Vorderseite des Trägermaterials (4, 4g) angeklebt ist.

8. Verwendung nach einem der vorhergehenden Ansprüche, wobei der Schnittschutz-Streifen (9, 9g) den ersten bzw. oberen Bereich (5, 5g) und den zweiten bzw. unteren Bereich (6, 6g) teilweise, vorzugsweise nur teilweise, überlappt.

9. Verwendung nach Anspruch 1, wobei das Trägermaterial eine Trägerfolie ist und wobei der Schnittschutz-Streifen (9) mittels einer Klebefläche (10) an der Trägerfolie (4) angeordnet ist, und zwar so, dass die vorderseitige Klebefläche (8) teilweise unterlappt ist, bzw. die Mitte des Schnittschutz-Streifens (9) circa der Höhe einer annähernd waagerechten Fläche (13) einer Wannenabbordung der Bade- oder Duschwanne (2) entspricht.

10. Verwendung nach einem der vorhergehenden Ansprüche 1-7, wobei der Schnittschutz-Streifen (9) so angeordnet wird, dass er mindestens den ersten bzw. oberen Bereich (5) komplett abdeckt oder den zweiten bzw. unteren Bereich (6) komplett abdeckt.

11. Verwendung nach Anspruch 1, wobei die flexible Metallfolie (9, 9g) mit einem Messer oder einem Teppichmesser nicht oder nur sehr schwer zerschnitten werden kann.

12. Verwendung nach einem der Ansprüche 1 oder 11, wobei die flexible Metallfolie (9, 9g) perforiert ist.

13. Verwendung nach einem der Ansprüche 1 oder 11-12, wobei die flexible Metallfolie (9, 9g) eine Gitterstruktur aufweist.

14. Verwendung nach einem der vorhergehenden Ansprüche, wobei das Trägermaterial (4, 4g) elastisch dehnbar ist.

15. Verwendung nach einem der vorhergehenden Ansprüche, wobei der flexible Schnittschutz-Streifen (9, 9g) schnittfest ist.

## Claims

1. Use of a sealing and mounting tape (100, 100g) for placing a bathtub or shower stall (2) in a corner comprised of two connecting walls standing perpendicular to each other, wherein the sealing and mounting tape (100, 100g) comprises a carrier material (4, 4g) and wherein the carrier material (4, 4g) forms a first or upper area (5, 5g) and a second or lower area (6, 6g), and wherein, in the mounted state, the sealing and mounting tape (100, 100g), is secured on the front side with the second or lower area (6, 6g) toward a connecting surface (12) of the bathtub or shower stall (2), and on the rear side with a first or second area (5, 5g) toward a connecting wall (1), wherein the sealing and mounting tape (100, 100g) comprises a flexible cut protection strip (9, 9g) comprised of a flexible material, so as to prevent any cutting of the sealing and mounting tape when cutting away a silicone joint, and
wherein the flexible cut protection strip (9, 9g) is bonded a front or upper side of the carrier material (4, 4g) by means of an adhesive surface (10), or placed in a pocket (25) or a strap of the sealing and mounting tape (100g),
wherein the cut protection strip (9, 9g) overlaps the first or upper area (5, 5g) and the second or lower area (6, 6g),
wherein the sealing and mounting tape (100, 100g) is vertically arranged, and
wherein an upper edge of the cut protection strip (9, 9g) projects over the lower edge of a rear sealing surface of the sealing and mounting tape (100, 100g) toward the connecting wall (1), and a lower edge of the cut protection strip (9, 9g) projects over an upper edge of a front sealing surface of the sealing and mounting tape (100, 100g) toward the connecting surface (12) of an on- or off-board installation of the bathtub or shower stall (2), wherein the cut protection strip (9, 9g) is a flexible metal film or a flexible Kevlar or carbon fabric.

2. Use according to claim 1, wherein the sealing and mounting tape (100, 100g) has a front adhesive surface (8, 8g) on a front side of the carrier material (4, 4g) toward the connecting surface (12) of the bathtub or shower stall (2), wherein the front adhesive surface (8, 8g) is only arranged in the second or lower area (6, 6g) of the carrier material (4, 4g), so that after the sealing and mounting tape (100, 100g) have been applied to the connecting surface (12) of the bathtub or shower stall (2), the first or upper area (5, 5g) projects over the bathtub or shower stall (2).

3. Use according to claim 2, wherein, in the mounted state, the sealing and mounting tape (100, 100g) has a rear adhesive surface (7, 7g) arranged in the first or upper area (5, 5g) on a rear side of the carrier material (4, 4g) toward the connecting wall (1, 1g).

4. Use according to one of the preceding claims, wherein the cut protection strip (9, 9g) is arranged in such a way that, in the mounted state, it comes to lie behind a silicone joint (28), or relines the silicone joint (28) .

5. Use according to claim 4, wherein the silicone joint (28) is arranged between the bathtub or shower stall (2), the face of a wall tile (3) and the sealing and mounting tape (100, 100g).

6. Use according to claim 4 or 5, wherein, in the mounted state, the cut protection strip (9, 9g) is arranged between the sealing and mounting tape (100, 100g) and a silicone joint (28) in such a way as not to cut through the carrier material (4, 4g) when cutting away the silicone joint (28).

7. Use according to one of the preceding claims, wherein the cut protection strip made out of cut-resistant material is bonded to the partial or complete surface of the front side of the carrier material (4, 4g).

8. Use according to one of the preceding claims, wherein the cut protection strip (9, 9g) partially, and preferably only partially, overlaps the first or upper area (5, 5g) and the second or lower area (6, 6g).

9. Use according to claim 1, wherein the carrier material is a carrier film, and wherein the cut protection strip (9) is arranged on the carrier film (4) by means of an adhesive surface (10), specifically in such a way that the front adhesive surface (8) is partially overlapped, or the middle of the cut protection strip (9) corresponds to roughly the height of an approximately horizontal surface (13) of a tray shelf of the bathtub or shower stall (2).

10. Use according to one of the preceding claims 1-7, wherein the cut protection strip (9) is arranged in such a way that it completely covers at least the first or upper area (5) or completely covers the second or lower area (6).

11. Use according to claim 1, wherein the flexile metal film (9, 9g) cannot be cut up with a knife or a carpet blade, or only with great difficulty.

12. Use according to one of claims 1 or 11, wherein the flexible metal film (9, 9g) is perforated.

13. Use according to one of claims 1 or 11-12, wherein the flexible metal film (9, 9g) has a lattice structure.

14. Use according to one of the preceding claims, wherein the carrier material (4, 4g) is elastically expandable.

15. Use according to one of the preceding claims, wherein the flexible cut protection strip (9, 9g) is cut-resistant.

## Revendications

1. Utilisation d'une bande d'étanchéité et de montage (100, 100g) pour la pose d'un bac de baignoire ou de douche (2) dans un coin composé de deux parois de raccordement perpendiculaires l'une à l'autre, la bande d'étanchéité et de montage (100, 100g) comprenant un matériau support (4, 4g) et le matériau support (4, 4g) constituant une première partie ou partie supérieure (5, 5g) et une seconde partie ou partie inférieure (6, 6g) et la bande d'étanchéité et de montage (100, 100g) en état monté étant installée à l'avant par sa seconde partie ou partie inférieure (6, 6g) sur une surface de raccordement (12) du bac de baignoire ou de douche (2) et à l'arrière par sa première partie ou partie supérieure (5, 5g) sur une paroi de raccordement (1) du bac de baignoire ou de douche (2), la bande d'étanchéité et de montage (100, 100g) comprenant une bande souple anti-coupe (9, 9g) composée d'un matériau souple afin d'empêcher un sectionnement de la bande d'étanchéité et de montage lors de la coupe d'un joint en silicone, et la bande souple anti-coupe (9, 9g) étant collée sur une face avant ou supérieur du matériau support (4, 4g) au moyen d'une surface de colle (10) ou insérée dans une poche (25) ou une boucle de la bande d'étanchéité et de montage (100g),
la bande anti-coupe (9, 9g) chevauchant la première partie ou partie supérieure (5, 5g) et la seconde partie ou partie inférieure (6, 6g),
la bande d'étanchéité et de montage (100, 100g) étant disposée perpendiculairement et un bord supérieur de la bande anti-coupe (9, 9g) dépassant du bord inférieur d'une surface d'étanchéité arrière de la bande d'étanchéité et de montage (100, 100g) vers la paroi de raccordement (1) et un bord inférieur de la bande anti-coupe (9, 9g) dépassant d'un bord avant d'une surface d'étanchéité avant de la bande d'étanchéité et de montage (100, 100g) vers la surface de raccordement (12) d'une bordure supérieure ou inférieure du bac de baignoire ou de douche (2), la bande anti-coupe (9, 9g) étant un film métallique souple ou une toile souple en kevlar ou en carbone.

2. Utilisation selon la revendication 1, dans laquelle la bande d'étanchéité et de montage (100, 100g) présente une surface de colle avant (8, 8g) sur une face avant du matériau support (4, 4g) en direction d'une surface de raccordement (12) du bac de baignoire ou de douche (2), la surface de colle avant (8, 8g) n'étant disposée que dans la seconde partie ou partie inférieure (6, 6g) du matériau support (4, 4g), de sorte que, après la pose de la bande d'étanchéité et de montage (100, 100g) sur la surface de raccordement (12) du bac de baignoire ou de douche (2), la première partie ou partie supérieure (5, 5g) dépasse du bac de baignoire ou de douche (2).

3. Utilisation selon la revendication 2, dans laquelle la bande d'étanchéité et de montage (100, 100g) en état monté présente une surface de colle arrière (7, 7g) disposée dans la première partie ou partie supérieure (5, 5g) sur une face arrière du matériau support (4, 4g) en direction de la paroi de raccordement (1, 1g).

4. Utilisation selon une des revendications précédentes, dans laquelle la bande anti-coupe (9, 9g) est disposée de manière à ce qu'elle vienne, en état monté, se poser derrière un joint en silicone (28) ou à servir de base au joint en silicone (28).

5. Utilisation selon la revendication 4, dans laquelle le joint en silicone (28) est disposé entre le bac de baignoire ou de douche (2), la surface avant d'un carrelage mural (3) et la bande d'étanchéité et de montage (100, 100g).

6. Utilisation selon la revendication 4 ou 5, dans laquelle la bande anti-coupe (9, 9g) en état monté est disposée entre la bande d'étanchéité et de montage (100, 100g) et un joint en silicone (28) de manière à ce que le matériau support (4, 4g) ne soit pas coupé lors de la coupe du joint en silicone (28).

7. Utilisation selon une des revendications précédentes, dans laquelle la bande anti-coupe en matériau résistant à la coupe est collée par une partie ou la totalité de sa surface sur une face avant du matériau support (4, 4g) .

8. Utilisation selon une des revendications précédentes, dans laquelle la bande anti-coupe (9, 9g) chevauche partiellement, de préférence seulement partiellement, la première partie ou partie supérieure (5, 5g) et la seconde partie ou partie inférieure (6, 6g).

9. Utilisation selon la revendication 1, dans laquelle le matériau support est un film support et la bande anti-coupe (9, 9g) est disposée au moyen d'une surface de colle (10) sur le film support (4), à savoir de manière à ce que la surface de colle avant (8) soit partiellement enduite par le bas ou que le milieu de la bande anti-coupe (9, 9g) représente environ la hauteur d'une surface approximativement horizontale (13) d'une bordure inférieure de bac du bac de bain ou de douche (2) .

10. Utilisation selon une des revendications précédentes 1 à 7, dans laquelle la bande anti-coupe (9) est disposée de manière à couvrir complètement au moins la première partie ou partie supérieure (5) ou la seconde partie ou partie inférieure (6).

11. Utilisation selon la revendication 1, dans laquelle le film métallique souple (9, 9g) ne peut pas être sectionné ou alors très difficilement avec un couteau ou un couteau à moquette.

12. Utilisation selon la revendication 1 ou 11, dans laquelle le film métallique souple (9, 9g) est perforé.

13. Utilisation selon une des revendications 1 ou 11 à 12, dans laquelle le film métallique souple (9, 9g) présente une structure en treillis.

14. Utilisation selon une des revendications précédentes, dans laquelle le matériau support (4, 4g) est extensible élastiquement.

15. Utilisation selon une des revendications précédentes, dans laquelle la bande anti-coupe (9, 9g) résiste à la coupe.
